(19) **Europäisches Patentamt**

**European Patent Office**

**Office européen des brevets**

(11) Publication number: **0 139 759 B1**

(12) **EUROPEAN PATENT SPECIFICATION**
published in accordance with Art.
158(3) EPC

(45) Date of publication of patent specification: 27.02.91  (51) Int. Cl.⁵: **G06F 13/38, G06F 12/06**

(21) Application number: **84901229.9**

(22) Date of filing: **23.03.84**

(86) International application number:
**PCT/JP84/00130**

(87) International publication number:
**WO 84/03783 (27.09.84 84/23)**

(54) SYSTEM FOR CONNECTING AND CONTROLLING EXTERNAL DEVICES.

(30) Priority: **24.03.83 JP 49320/83**

(43) Date of publication of application:
**08.05.85 Bulletin 85/19**

(45) Publication of the grant of the patent:
**27.02.91 Bulletin 91/09**

(84) Designated Contracting States:
**DE FR GB**

(56) References cited:
**EP-A- 0 009 594**
**GB-A- 1 444 141**
**JP-A-57 178 523**
**JP-A-57 211 629**
**US-A- 4 025 906**

**PATENTS ABSTRACTS OF JAPAN, vol. 6, no.
162 (P-137)[1040], 25th August 1982; & JP-
A-57 79 540**

(73) Proprietor: **FANUC LTD.**
**3580, Shibokusa Aza-Komanba, Oshino-mura
Minamitsuru-gun, Yamanashi 401-05(JP)**

(72) Inventor: **KISHI, Hajimu**
**Hinohirayamadai-Jutaku 1104 6-7-8, As-
ahigaoka**
**Hino-shi Tokyo 191(JP)**
Inventor: **TANAKA, Kunio**
**5-8-13, Tamagawa-cho Akishima-shi
Tokyo 196(JP)**

(74) Representative: **Billington, Lawrence Emlyn et
al**
**HASELTINE LAKE & CO Hazlitt House 28
Southampton Buildings Chancery Lane
London WC2A 1AT(GB)**

PATENTS ABSTRACTS OF JAPAN, vol. 5, no. 56 (P-57)[728], 17th April 1981; & JP-A-56 11 532

IEEE TRANSACTIONS ON INDUSTRIAL ELEC-TRONICS AND CONTROL INSTRUMENTA-TION, vol. IECI-26, no. 3, August 1979, pages 151-155, IEEE, New York, US; C.J. TAVORA: "The remote link unit - an advanced remote terminal concept"

## Description

This invention relates to an external equipment connection control method for connecting external equipment to the connectors of a computer body having a processor, and for performing an exchange of data between the processor and the external equipment.

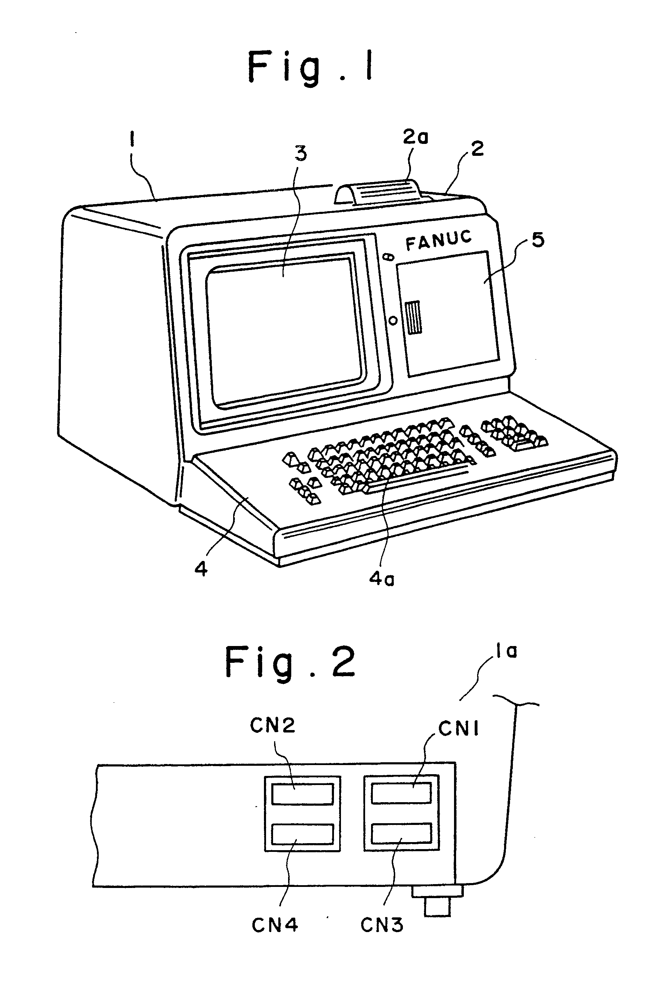

Computers have recently made headway in a variety of fields, and desktop computers in particular find wide use owing to their simplicity and low expense. By way of example, as shown in Fig. 1, a desktop computer for creating NC (numerical control) programs includes a main body 1 having an upper side provided with a printer 2 and a front side provided with a CRT display device 3. Disposed in front of the CRT display 3 is an operator's panel 4 on which there are provided an array of keys 4a such as character keys, numeric keys and function keys. Disposed at the side of the CRT display 3 is a magnetic storage device 5 such as a floppy disk.

Numeral 2a denotes a recording paper on which printing is performed by the printer 2.

A microprocessor and memory are incorporated within the main body 1. The processor executes processing on the basis of a basic control program stored in the memory. Instructions and the results of processing are displayed on the CRT display device 3. The processor executes prescribed processing based on commands, data and the like entered from the operator's panel 4, creates an NC program, prints out the program via the printer 2 and stores the program via the magnetic storage device 5.

A desktop computer of this kind comes equipped with the minimum necessary instrumentation owing to limitations imposed by system construction and cost.

Therefore, in order to carry out a greater amount of processing as well as processing which is more sophisticated, expansion of memory is required, as by connecting a magnetic bubble memory or magnetic cassette tape device. Furthermore, depending upon the object of processing, an external printer and a paper tape reader/puncher/printer may also be needed. It is also required that the NC unit and the like be connected online.

These pieces of external equipment are acquired by the user separately of the desktop computer according to the processing which the user himself requires to be performed. The desktop computer is therefore equipped with connectors for connecting the external equipment. Specifically, as shown in Fig. 2, the compuuter has a plurality (four in the illustration) of connectors $CN_1$ through $CN_4$ provided at the lower portion of the main body 1 on its back side 1a. The arrangement is such that cables belonging to the external equipment are connected to these connectors so that the external equipment can be connected to the processor bus.

With this conventional arrangement, the processor of the main apparatus cannot distinguish the kind of external equipment connected. Accordingly, each of the connectors $CN_1$ through $CN_4$ is devoted to a specific piece of external equipment so that the processor may perform an exchange of data with the equipment without recognizing the kind of external equipment connected thereto. As an example, the connector $CN_1$ is for the puncher of a paper tape reader, the connector $CN_2$ for a magnetic cassette tape device, the connector $CN_3$ for an XY plotter and the connector $CN_4$ for a tablet.

However, with the conventional arrangement of this type, pieces of external equipment other than those mentioned cannot be connected to the connectors, and difficulty is involved in realizing more sophisticated and higer quality processing. In addition, with the conventional arrangement, a printer in one's possession cannot be connected in place of the XY plotter, and a magnetic bubble memory cannot be connected in place of the cassette tape device. Equipment already possessed cannot be connected, so that one must specially purchase the piece of external equipment that is connectable. The conventional arrangement is thus disadvantageous in that there is a lack of flexibility. Similarly, since plural pieces of the same kind of equipment (e.g., XY plotters) cannot be connected with the conventional arrangement, difficulties are involved in speeding up data processing.

To eliminate such shortcomings, it has been contemplated to provide the main body 1 with a number of connectors capable of dealing with equipment of all kinds. However, this involves such drawbacks as higher cost and more complicated control of the processor.

JP-A-57-79 540 discloses an automatic connection system for optionally connecting a variety of equipment to plural connectors of a processor. Each item of equipment is provided with its own discrimination code memory, for supplying information to the processor allowing the type of each item of equipment to be discriminated. There is no manual entry of IO commands to the processor.

JP-A-57-178 523 discloses a large-scale computer system in which each terminal to be connected to a data processor 2 contains a storage part 13 where the attributes of that terminal are stored. The processor 2 reads the attributes of each terminal and stores them in its own memory. The processor then uses the attributes to control the terminals.

3

EP 0 139 759 B1

EP-A-0 009 594 concerns a terminal used in a data processing system. Again, each terminal stores characterisation data in its own memory. This characterisation data includes information on the types of storage, optional input/output devices, etc. possessed by each terminal, which information is needed by the host processor.

A drawback of all the above proposals is that each item of external equipment to be connected to the processor must be specially adapted, i.e. provided with a memory storing characterisation data. It is not possible to connect arbitrary pieces of external equipment lacking such a memory.

Accordingly, it is desirable to provide an external equipment connection control method whereby arbitrary pieces of external equipment can be connected at will irrespective of the number of connectors.

According to the present invention, there is provided a method of connecting external equipment to a main apparatus having at least a processor, a memory and one or more connectors for connecting the external equipment, wherein information is applied as an input to the main apparatus indicative of external equipment to be connected to each connector, and exchange of data between the main apparatus and external equipment connected thereto is executed on the basis of said information, characterised by steps of:

manually inputting one or more IO commands, each associating a respective said connector with an item of external equipment, using an input device of the main apparatus;

processing, using the processor of the main apparatus, each IO command to form connection information indicating at least the type of external equipment to be connected to the respective connector;

storing said connection information in the memory of the main apparatus; and

retrieving said connection information from the memory of the main apparatus as required during normal operation for use in exchange of data between the main apparatus and external equipment.

In this way, the processor is made capable of recognizing the type of external equipment connected to the connector. This makes it possible to connect and control external equipment other than that of a standard construction so that the system is readily capable of performing high quality and sophisticated processing. Further, by means of the present invention, the user is capable of readily connecting external equipment already in his possession to a computer main body, and of controlling the equipment. This makes it possible for him to construct an inexpensive and versatile system.

In other words, an embodiment of the invention may provide an external equipment connection control method in which external input/output units can be connected to the connectors of the computer body at will, and in which, even when a number of arbitrary input/output units are connected to the connectors of the computer body, an exchange of data can be performed between the processor and these input/output units.

Reference is made, by way of example, to the accompanying drawings in which:-

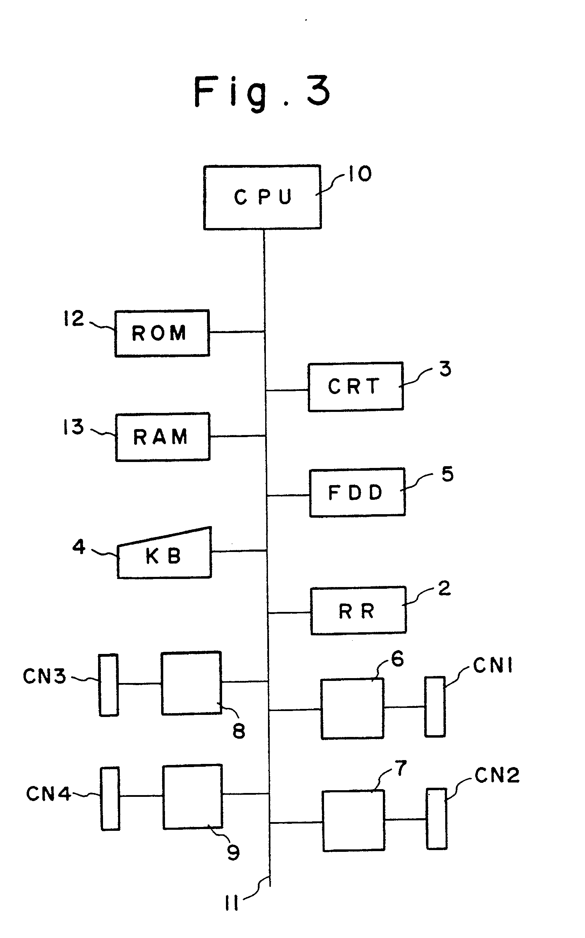

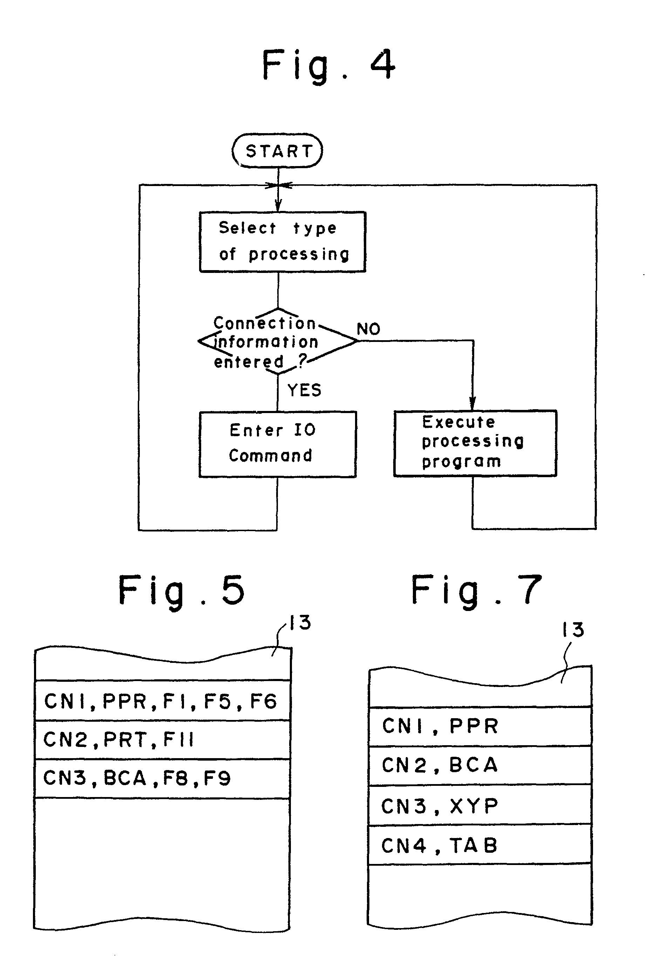

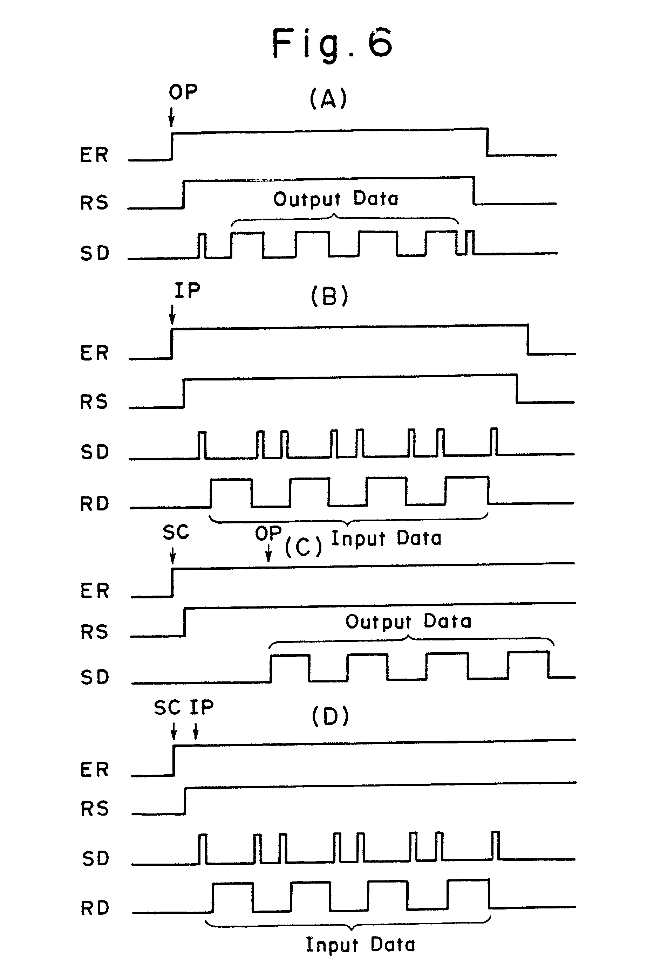

Fig. 1 is a view showing the construction of a common desktop computer, Fig. 2 is a view showing an arrangement of connectors in the construction of Fig. 1, Fig. 3 is a block diagram of an embodiment of the present invention, Fig. 4 is a flowchart of processing embodying the present invention, Fig. 5 is a view of stored connection information in the arrangement of Fig. 3, Fig. 6 is a view of signal formats according to the arrangement of Fig. 3, and Fig. 7 is a view of stored standard connection information in the arrangement of Fig. 3.

Fig. 3 is a block diagram of a desktop computer for creating an NC program and indicates an embodiment of the present invention. In the Figure, devices or components similar to those shown in Figs. 1 and 2 are designated by like symbols.

In Fig. 3, numerals 6, 7, 8 and 9 denote interface circuits connected respectively to the connectors $CN_1$, $CN_2$, $CN_3$, $CN_4$ shown in Fig. 2. Numeral 10 denotes a processor such as an arithmetic circuit for executing processing in accordance with the instructions of a basic control program or application program, 12 a read-only memory (ROM) which stores a basic control program, and 13 a random-access memory (RAM) for storing the results of calculations performed by the processor 10, data entered from the operator's panel 4, and an application program, other than the basic control program, read out of the magnetic storage device 5. Numeral 11 represents an address/data bus interconnecting the processor 10, ROM 12, RAM 13, operator's panel 4, display 3, printer 2, magnetic storage device 5 and interface circuits 6, 7, 8, 9.

The operation of the computer shown in Fig. 3 will now be described.

Before operating the system, an application program such as an image processing program and an NC tape creation program are loaded into the RAM 13 from the magnetic storage device 5. Input data from the operator's panel 4 are processed by the processor 10 in accordance with the basic control program stored in the RON 12 and the application program stored in the RAM 13, and the results of processing are stored in the RAM 13. At the same time, the input data and the results of processing are displayed on the display 3 and, if necessary, can be printed out by the printer 2.

4

When using the present invention, the arrangement is such that connection information is entered prior to data processing. Fig. 4 is a flowchart of the pertinent processing.

a. First, a floppy disk storing the desired application program is set in the magnetic storage device 5 by the operator. As a result, the application program is loaded into the RAM 13 from the magnetic storage device 5.

b. Thereafter, a display calling for selection of the type of processing appears on the display device 3. The operator responds by entering the type of processing from the operator's panel 4.

For example, the display 3 will call for the operator to press an "RO" key for input processing (data input from external equipment), an "R1" key for output processing (data output to external equipment), an "R2" key for run processing (execution of a loaded program), and an "R3" key for connection information input processing. The operator selects the kind of processing by pressing the corresponding key on the operator's panel 4.

c. When the operator presses the "R3" key to select connection information input processing, the processor 10 permits connection information to be entered as an IO command from the operator's panel 4.

An IO command takes on a format of the following kind and is entered from the operator's panel by the operator in accordance with such format:

$$IO \text{ name}, CN_i, \{Fj[, Fk \ (, F\ell)]\} NL \dots (1)$$

Here, "name" refers to the name of the piece of external equipment to be connected, for which the following abbreviations are used:

PPR (paper tape reader/puncher/printer), BCA (cassette device/bubble memory cassette), PRT (external printer), XYP (XY plotter), TAB (tablet device), NC (NC unit), and AUX (miscellaneous).

Further, "$CN_i$" represents the number ($i = 1\text{-}4$) of the connector for connecting the device designated by "name" above, "$Fj$" is the number ($j = 1, 8\text{-}14$) of a function key for designating an input of the operator's panel, "$Fk$" is the number ($k = 5, 6, 8\text{-}14$) of a function key for designating an output, "$F\ell$" is the number ($1 = 5$) of a function key for designting printing (PPR), and "NL" is a code for indicating the end of an IO command and is entered by operating a key for which designates an end of input.

For example, in an instance where the paper tape/reader/puncher, external printer and cassette device are connected to the connectors $CN_1$, $CN_2$ and $CN_3$, respectively, IO commands will be entered as follows:

① IO PPR, $CN_1$, F1, F6, F5 NL

② IO PRT, $CN_2$, F11 NL

③ IO BCA, $CN_3$, F8, F9 NL

At this time the paper tape reader/puncher/printer connected to the connector $CN_1$ has the paper tape reader set to a function key "F1", the paper tape puncher to a function key "F6", and the printer to a function key "F5". In addition, the external printer connected to the connector $CN_2$ is set to a function key "F11". For the cassette device connected to the connector $CN_3$, an input from the cassette is set to a function key "F8", and an output to the cassette is set to a function key "F9". d. The connection information (IO command) entered by the operator is transmitted to the processor 10 and stored as connection information in the RAM 13 via the bus 11.

Fig. 5 illustrates the fashion in which such connection information is stored. The name of a connected piece of equipment and a function key number are stored in correspondence with each of the connector numbers.

The processor 10 uses this information in a recognition operation for the purpose of exchanging data with a designated piece of external equipment when an input or output is to be made with the external equipment in response to a designation from the operator's panel 4 or from the program, as will be described later.

When entry has been completed, the system returns to the step b. In this step the operator presses the R0 key, R1 key or R2 key to perform the particular processing.

By way of example, the processor 10 runs the loaded program if the R2 key is pressed. If the loaded program is an NC tape creation program, then the processor 10 edits an NC program in accordance with NC data entered from the operator's panel 4 and causes the display device 3 to display a machined graphic based on entered NC data or the NC data itself for confirmation by the operator. Thereafter, the processor 10 repeats NC data entry, NC program creation and display in successive fashion to eventually store the created NC program in the RAM 13.

If the R0 key or R1 key is pressed, guidance for designating the selection of a piece of external equipment for input or output is displayed on the display 3. The operator responds by pressing the function key which is provided on the operator's panel 4 and which corresponds to the desired piece of external

5

equipment. As a result, the processor 10 senses the connector numbers and the types of external equipment corresponding to the pressed function keys from the above-described connection information in the RAM 13, designates the interface circuits 6 through 9 that correspond to the connector numbers and performs an input or output with the external equipment via the bus 11. At this time, based on the type of external equipment, the processor 10 controls the data signal format, timing, etc. according to the external equipment. For example, AUX (miscellaneous external equipment) and NC (NC unit) data differ from each other, as shown in Fig. 6.

Specifically, for AUX, Fig. 6(A) shows the situation which prevails in case of an output from the processor 10, and Fig. 6(B) illustrates the situation in case of an input to the processor 10. As shown in Figs. 6(A) and 6(B), a transmission strobe ER is turned on, and a reception strobe RS is turned on correspondingly, each time there is an output or input. For an output [Fig. 6(A)], input data are provided with an identification pulse on both sides thereof to constitute transmission data SD. For an input [Fig. 6(B)], input data RD are transmitted in accordance with timing pulses in the transmission data SD. For NC, Fig. 6-(C) shows the situation which prevails in case of an output from the processor 10, and Fig. 6(D) illustrates the situation in case of an input to the processor 10. As shown in Figs. 6(C) and 6(D), a transmission strobe ER is turned on, and a reception strobe RS is turned on correspondingly, at a time SC at which an input/output unit is selected. For an output [Fig. 6(C)], transmission data SD are delivered as an output in accordance with an output operation OP. For an input [Fig. 6(D)], input data RD are transmitted in accordance with an input operation IP, in synchronism with timing pulses in the transmission data SD.

These control operations are performed by the processor 10 through control of interface circuits depending upon the type of external equipment.

In a case where inputs are received from the aforementioned external equipment, the data from the external equipment are transferred to the RAM 13 via the interface circuits 6 - 9 and bus 11 to be used in subsequent processing. Conversely, where outputs are delivered to external equipment, data (processing results) from the RAM 13 are transferred to the external equipment via the bus 11 and interface circuits 6 - 9 to be stored, printed, etc.

With the present invention, transmission rate (baud rate) and type of stop bit can be designated as the aforementioned connection information.

In such case, the following 10 command format is used in place of that shown in formula (1):

IO name, CNi, {Fj[, Fk (, Fℓ)]} (, BR$_m$) (,S$_n$ ) NL ... (2) Here, "BR$_m$" (m = 0-10) indicates the baud rate, wherein m = 50 corresponds to 50 baud, m = 1 corresponds to 100 baud, and so on through m = 10, which corresponds to 9600 baud. "S$_n$" (n = 0-2) represents a stop bit, wherein n = 0 indicates one bit, n = 1 two bits, and n = 2 1.5 bits.

When the operator makes an input from the operator's panel 4 in accordance with this format, the transmission rate and stop bit are stored in correspondence with a connector number in the RAM 13 just as shown in Fig. 5 described above. The processor 10 is thus capable of bringing an input/output data format into conformance with a piece of external equipment. Accordingly, it is possible for the computer to be connected to a piece of external equipment having any transmission rate or stop bit.

The present invention also makes it possible to omit entry of part of an IO command.

In other words, the computer stores correspondence between connector numbers and external equipment in the RAN 13 beforehand as standard connection information.

By way of example, as shown in Fig 7, CN$_1$-PPR, CN$_2$-BCA, CN$_3$-XYP CN$_4$-TAB can be set in the RAM 13 in advance. Then, with respect to a connector for which there is no IO command, the processor 10 will be capable of performing processing on the assumption that the standard piece of external equipment that has been set is to be connected to the connector.

For example, with the aforementioned example of connections, connection information will be scored in the RAM 13 as shown in Fig. 5 even if the IO command ① is not entered.

Likewise, with the present invention, entry of a function key number can also be omitted. This is done by presetting a correspondence table between the kinds of external equipment and the function key numbers as a standard pattern in the RAM 13. Then, in a case where no function key number has been entered, the processor 10 creates the above-described connection information on the assumption that a function key number in the table has been designated.

The following is an example of the contents of the table:

PPR: F1, F6, F5

BCA: F8, F9

NC: F8, F9

AUX: F8, F9

XYP: F10

PRT: F5

Though the present invention has been described in conjunction with a embodiment thereof, the invention is not limited to the aforesaid embodiment and various modifications can be made in accordance with the gist of the invention without departing from the scope thereof.

Industrial Applicability

Thus, according to the present invention, it is possible to connect any piece of external equipment to a computer main body, and to control the equipment. The invention is therefore well-suited for use in computers for creating NC (numerical control) information and can be applied to various computers to which external equipment is connected for control thereby.

## Claims

1. A method of connecting external equipment to a main apparatus (1) having at least a processor (10), a memory (13) and one or more connectors (CN1...CN4) for connecting the external equipment, wherein information is applied as an input to the main apparatus indicative of external equipment to be connected to each connector, and exchange of data between the main apparatus and external equipment connected thereto is executed on the basis of said information, characterised by steps of:

   manually inputting one or more IO commands, each associating a respective said connector with an item of external equipment, using an input device (4) of the main apparatus (1);

   processing, using the processor (10) of the main apparatus, each IO command to form connection information indicating at least the type of external equipment to be connected to the respective connector;

   storing said connection information in the memory (13) of the main apparatus (1); and

   retrieving said connection information from the memory (13) of the main apparatus as required during normal operation for use in exchange of data between the main apparatus and external equipment.

2. A method according to claim 1, wherein one or more of said IO commands and resultant connection information further include information on a transmission rate for data exchange.

3. A method according to claim 1 or 2, wherein one or more of said IO commands, and said resultant connection information, further include information specifying one or more function keys (F1...F9) to be operated for initiating data exchange between the main apparatus (1) and the respective item of external equipment.

4. A method according to claim 3, wherein at least two function keys are specified in respect of a said item of external equipment capable of two-way data exchange, for initiating data input and data output respectively.

5. A method according to any preceding claim, wherein one or more of said IO commands and resultant connection information further include information on a type of stop bit required by the respective item of external equipment.

7

6. A method according to any preceding claim, wherein said memory (13) pre-stores standard connection information indicating at least a type of external equipment to be connected to the or each connector (CN1...CN4), for use if no IO command is entered in respect of that connector.

7. A method according to any preceding claim, wherein said memory (13) pre-stores a correspondence table between types of external equipment and function keys (F1...F9), for specifying the function keys for initiating data exchange when this information is absent from a said IO command.

8. A method according to claim 6 or 7, wherein said processor (10) uses said standard connection information and/or said correspondence table when processing said IO commands to form connection information.

9. A method according to claim 4, wherein said IO commands have the format:

$$\texttt{IO name, CN}_\texttt{i}\texttt{, } \left\{\texttt{Fj[,Fk(,Fl)]}\right\}\texttt{NL}$$

where "name" identifies the type of external equipment, Fj identifies a function key for input, Fk identifies a function key for output, F1 identifies a function key for an additional function (if present) of the external equipment, and NL indicates the end of the IO command.

10. A method according to claims 2, 3 and 4 in

$$\texttt{IO name, CN}_\texttt{i}\texttt{, } \left\{\texttt{Fj[,Fk(,Fl)]}\right\}\texttt{(,BR}_\texttt{m}\texttt{)(,S}_\texttt{n}\texttt{)NL}$$

combination, wherein said IO commands have the format: IO name, $CN_i$, $\{Fj[,Fk(,Fl)]\}(,BR_m)(,S_n)NL$ where "name" identifies the type of external equipment, Fj identifies a function key for input, Fk identifies a function key for output, Fl identifies a function key for an additional function (if present) of the external equipment, $Br_m$ identifies a transmission rate for data exchange, $S_n$ represents a stop bit, and NL indicates the end of the IO command.

11. A method according to any preceding claim, wherein the main apparatus (1) is a computer adapted for creating a numerical control program.

**Revendications**

1. Un procédé de connexion de dispositifs externes à un appareil principal (1) comprenant au moins un processeur (10), une mémoire (13) et un ou plusieurs connecteurs ($CN_1...CN_4$) pour connecter les dispositifs externes, dans lequel des informations sont appliquées en entrée à l'appareil principal pour signaler le dispositif externe à connecter à chaque connecteur, et un échange de données entre l'appareil principal et les dispositifs externes qui lui sont connectés est effectué sur la base desdites informations, caractérisé par les opérations :
    d'introduction manuelle d'une ou plusieurs commandes E/S, associant chacune un connecteur respectif desdits connecteurs avec un des dispositifs externes, en utilisant un dispositif d'entrée (4) de l'appareil principal (1);
    de traitement, en utilisant le processeur (10) de l'appareil principal, de chaque commande E/S pour former des informations de connexion indiquant au moins le type du dispositif externe à connecter au connecteur respectif ;
    de stockage desdites informations de connexion dans la mémoire (13) de l'appareil principal (1) ; et de recherche desdites informations de connexion dans la
    mémoire (13) de l'appareil principal lorsque cela est nécessaire pendant une opération normale pour les utiliser au cours de l'échange de données entre l'appareil principal et le dispositif externe.

2. Un procédé selon la revendication 1, dans lequel une ou plusieurs desdites commandes E/S et des informations de connexion résultantes comprennent encore des informations au sujet de la vitesse de transmission appliquée pour l'échange des données.

3. Un procédé selon l'une des revendications 1 ou 2, dans lequel une ou plusieurs desdites commandes E/S, et lesdites informations de connexion résultantes, comprennent encore des informations précisant une ou plusieurs touches de fonction (F1...F9) à manoeuvrer pour lancer l'échange de données entre l'appareil principal (1) et le dispositif respectif des dispositifs externes.

4. Un procédé selon la revendication 3, dans lequel au moins deux touches de fonction sont spécifiées par rapport à un desdits dispositifs externes capables d'effectuer un échange bidirectionnel de données, pour lancer l'entrée des données et la sortie des données respectivement.

5. Un procédé selon l'une quelconque des revendications précédentes, dans lequel une ou plusieurs desdites commandes E/S et les informations de connexion résultantes comprennent en plus des informations au sujet du type de bit d'arrêt exigé par le dispositif respectif des dispositifs externes.

6. Un procédé selon l'une quelconque des revendications précédentes, dans lequel ladite mémoire (13) stocke d'avance des informations de connexion standard précisant au moins un type de dispositif externe à connecter au ou à chaque connecteur ($CN_1...CN_4$), pour l'utiliser si aucune commande E/S n'est introduite au sujet de ce connecteur.

7. Un procédé selon l'une quelconque des revendications précédentes, dans lequel ladite mémoire (13) stocke d'avance une table de correspondance entre des types de dispositifs externes et des touches de fonction (F1... F9), pour spécifier les touches de fonction destinées à lancer l'échange des données quand ces informations sont absentes d'une desdites commandes E/S.

8. Un procédé selon l'une des revendications 6 ou 7, dans lequel ledit processeur (10) utilise lesdites informations standard de connexion et/ou ladite table de correspondance au cours du traitement desdites commandes E/S pour former des informations de connexion.

9. Un procédé selon la revendication 4, dans lequel lesdites commandes E/S ont le format suivant :
Nom E/S, CNi, {Fj[, Fk (, Fl)]} NL (1)

où "nom" identifie le type de dispositif externe, Fj identifie une touche de fonction pour l'entrée, Fk identifie une touche de fonction pour la sortie, Fl identifie une touche de fonction pour une fonction supplémentaire (le cas échéant) du dispositif externe, et NL indique la fin de la commande E/S.

10. Un procédé selon les revendications 2, 3 et 4 en combinaison, dans lequel lesdites commandes E/S ont le format suivant :
Nom E/S, CNi, {Fj[, Fk (, Fl)]} (, $BR_m$) (, Sn) NL (2)

où "nom" désigne le type du dispositif externe, Fj indique une touche de fonction pour une entrée, Fk identifie une touche de fonction pour une sortie, Fl identifie une touche de fonction pour une fonction supplémentaire (le cas échéant) de l'équipement externe, $Br_m$ indique une vitesse de transmission pendant l'échange de données, $S_n$ représente un bit d'arrêt, et NL indique la fin de la commande E/S.

11. Un procédé selon l'une quelconque des revendications précédentes, dans lequel l'appareil principal (1) est un ordinateur adapté pour créer un programme de commande numérique.

## Ansprüche

1. Verfahren zum Verbinden einer externen Vorrichtung mit einem Hauptgerät (1), das zumindest einen Prozessor (10), einen Speicher (13) und eine oder mehrere Verbindungseinrichtungen (CN1 ... CN4) zum Verbinden der externen Vorrichtung hat, wobei dem Hauptgerät Information als eine Eingabe zugeführt wird, die kennzeichnend für die externe Vorrichtung ist, die mit jeder Verbindungseinrichtung zu verbinden ist, und ein Austausch von Daten zwischen dem Hauptgerät und der externen Vorrichtung, die mit diesem verbunden ist, auf der Grundlage der Information ausgeführt wird, **gekennzeichnet** durch Schritte zum:
   - Eingeben eines oder mehrerer 10-Befehle von Hand, wovon jeder eine betreffende der Verbindungseinrichtungen einer Einheit der externen Vorrichtung zuordnet, unter Benutzung einer Eingabeeinrichtung (4) des Hauptgeräts (1),

- Verarbeiten jedes 10-Befehls unter Benutzung des Prozessors (10) des Hauptgeräts, um Verbindungsinformation zu bilden, die zumindest den Typ der externen Vorrichtung, welche mit der betreffenden Verbindungseinrichtung zu verbinden ist, kennzeichnet,
- Speichern der Verbindungsinformation in dem Speicher (13) des Hauptgeräts (1) und
- Abrufen der Verbindungsinformation aus dem Speicher (13) des Hauptgeräts nach Bedarf während des normalen Betriebs zur Benutzung beim Austauschen von Daten zwischen dem Hauptgerät und der externen Vorrichtung.

2. Verfahren nach Anspruch 1, bei dem einer oder mehrere der 10-Befehle und die sich ergebende Verbindungsinformation ferner Information betreffend eine Übertragungsrate für den Datenaustausch enthält.

3. Verfahren nach Anspruch 1 oder 2, bei dem einer oder mehrere der 10-Befehle und die sich ergebende Verbindungsinformation ferner Information enthalten, die eine oder mehrere Funktionstasten (F1 ... F9) angibt, welche zum Initialisieren eines Datenaustausches zwischen dem Hauptgerät (1) und der betreffenden Einheit der externen Vorrichtung zu betätigen ist/sind.

4. Verfahren nach Anspruch 3, bei dem zumindest zwei Funktionstasten in bezug auf die Einheit der externen Vorrichtung, die fähig ist, einen Zweiweg-Datenaustausch durchzuführen, zum Initialisieren einer Dateneingabe bzw. einer Datenausgabe angegeben werden.

5. Verfahren nach einem der vorhergehenden Ansprüche, bei dem einer oder mehrere der 10-Befehle und die sich ergebende Verbindungsinformation ferner Information betreffend den Typ eines Stop-Bit, das durch die betreffende Einheit der externen Vorrichtung angefordert wird, enthält.

6. Verfahren nach einem der vorhergehenden Ansprüche, bei dem der Speicher (13) vorab Standard-Verbindungsinformation speichert, die zumindest einen Typ der externen Vorrichtung kennzeichnet, welche mit der oder jeder der Verbindungseinrichtungen (CN1 ... CN4) zu verbinden ist, zur Benutzung dann, wenn kein 10-Befehl in bezug auf die Verbindungseinrichtung eingegeben ist.

7. Verfahren nach einem der vorhergehenden Ansprüche, bei dem der Speicher (13) vorab eine Korrespondenztabelle speichert betreffend die Beziehungen zwischen den Typen von externen Vorrichtungen und den Funktionstasten (F1 ... F9) zum Angeben der Funktionstasten zur Initialisierung eines Datenaustausches, wenn diese Information in einem 10-Befehl nicht vorliegt.

8. Verfahren nach Anspruch 6 oder 7, bei dem der Prozessor (10) die Standard-Verbindungsinformation und/oder die Korrespondenztabelle benutzt, wenn er die 10-Befehle verarbeitet, um Verbindungsinformation zu bilden.

9. Verfahren nach Anspruch 4, bei dem die 10-Befehle das Format

$$\text{IO-Name, } CN_i, \left\{ F_j \left[, F_k(,Fl) \right] \right\} NL$$

haben, wobei "Name" den Typ der externen Vorrichtung kennzeichnet, $F_j$ eine Funktionstaste für die Eingabe kennzeichnet, $F_k$ eine Funktionstaste für die Ausgabe kennzeichnet, $Fl$ eine Funktionstaste für eine zusätzliche Funktion (falls vorhanden) der externen Vorrichtung kennzeichnet und NL das Ende des 10-Befehls anzeigt.

10. Verfahren nach Anspruch 2, 3 u. 4 in Kombination, bei dem die 10-Befehle das Format

$$\text{IO-Name, } CN_i, \left\{ F_j \left[, F_k(,Fl) \right] \right\} (,BR_m)(,S_n) NL$$

haben, wobei "Name" den Typ der externen Vorrichtung kennzeichnet, $F_j$ eine Funktionstaste für die Eingabe kennzeichnet, Fk eine Funktionstaste für die Ausgabe kennzeichnet, Fl eine Funktionstaste für eine zusätzliche Funktion (falls vorhanden) der externen Vorrichtung kennzeichnet, $BR_m$ eine Übertragungsrate für einen Datenaustausch kennzeichnet, $S_n$ ein Stop-Bit repräsentiert und NL das Ende des 10-Befehls anzeigt.

11. Verfahren nach einem der vorhergehenden Ansprüche, bei dem das Hauptgerät (1) ein Computer ist, der zum Erzeugen eines numerischen Steuerprogramms bestimmt ist.

# Fig. 1

# Fig. 2

# Fig.3

# Fig. 4

# Fig. 5

| 13 |

CN1, PPR, F1, F5, F6

CN2, PRT, F11

CN3, BCA, F8, F9

# Fig. 7

| 13 |

CN1, PPR

CN2, BCA

CN3, XYP

CN4, TAB

14

# Fig. 6